# EUROPEAN PATENT APPLICATION

(11) **EP 4 589 455 A1**
(43) Date of publication of application: **23.07.2025**
(21) Application number: 24220491.5
(22) Date of filing: 17.12.2024
(51) Int. Cl.: G06F 18/214

(54) **INFORMATION PROCESSING PROGRAM, INFORMATION PROCESSING METHOD, AND INFORMATION PROCESSING DEVICE**

(30) Priority: 21.01.2024 IL 31027724
(71) Applicant: FUJITSU LIMITED, Kawasaki-shi, Kanagawa 211-8588 (JP); B.G. NEGEV TECHNOLOGIES AND APPLICATIONS LTD., at Ben-Gurion University, 841050 Beer Sheva (IL)
(72) Inventor: MACHIDA, Takanori, Kawasaki-shi, Kanagawa, 211-8588 (JP); HIGUCHI, Yuji, Kawasaki-shi, Kanagawa, 211-8588 (JP); KOKUBO, Hirotaka, Kawasaki-shi, Kanagawa, 211-8588 (JP); FUJISHIMA, Yuki, Kawasaki-shi, Kanagawa, 211-8588 (JP); MURAKAMI, Masahiko, Kawasaki-shi, Kanagawa, 211-8588 (JP); HOFMAN, Omer, 841050 Beer Sheva (IL); GILONI, Amit, 841050 Beer Sheva (IL); ELOVICI, Yuval, 841050 Beer Sheva (IL); SHABTAI, Asaf, 841050 Beer Sheva (IL)
(74) Representative: Hoffmann Eitle

(57) **Abstract**

An information processing program causes a computer (10) to execute a process including acquiring a first value representing a size of a region of an object included in a first image, determining a missing rate for an adversarial patch, based on a second value representing a minimum size of the adversarial patch acquired according to the first value, generating a second image in which missingness exceeding the missing rate is added to the first image, and comparing a first detection result obtained by inputting the first image into an object detection model with a second detection result obtained by inputting the second image into the object detection model.

## Description

### FIELD

The embodiments discussed herein are related to an informaiton processing program, an information processing method, and an information processing device that use image AI for object detection and the like.

### BACKGROUND

Adversarial patch attacks against image artificial intelligence (AI) for object detection and the like cause false recognition of objects to be detected, for example, in fraud detection at self-checkouts in the retail domain and license plate recognition in the public security area. Adversarial patches are a variant of adversarial example attacks and are also called adversarial example patches.

To detect adversarial patch attacks, for example, a class output by object detection for an input image subjected to image processing is compared with a class output by object detection for an input image without image processing, and, if there is a mismatch, it is determined that a patch attack has occurred. Here, examples of the image processing include processing of adding missing straight lines with a randomly set width and spacing, and processing of adding a missing square with a randomly set size and position to the input image.
Patent Literature 1: Japanese Laid-open Patent Publication No. 2023-078085
Patent Literature 2: Japanese Laid-open Patent Publication No. 2022-080285
Patent Literature 3: International Publication Pamphlet No. WO2022/264331
Patent Literature 4: U.S. Patent Application Publication No. 2019/0238568
Patent Literature 5: U.S. Patent No. 10783401

However, for example, when missingness with a random size and position is added, the missingness may sometimes fail to cover a patch and fail to reduce the effectiveness of the patch and to detect a patch attack, leading to overlooking of fraudulent use of self-checkouts, license plates, and the like.

It is an object in one aspect of an embodiment of the invention is to improve detection accuracy against adversarial patch attacks.

### SUMMARY

According to an aspect of an embodiment, an information processing program causes a computer to execute a process including: acquiring a first value representing a size of a region of an object included in a first image; determining a missing rate for an adversarial patch, based on a second value representing a minimum size of the adversarial patch acquired according to the first value; generating a second image in which missingness exceeding the missing rate is added to the first image; and comparing a first detection result obtained by inputting the first image into an object detection model with a second detection result obtained by inputting the second image into the object detection model. This configuration can improve detection accuracy against adversarial patch attacks.

According to one aspect of an embodiment, the detection accuracy against adversarial patch attacks can be improved.

### BRIEF DESCRIPTION OF DRAWINGS

FIG. 1 is a diagram for explaining object detection;
FIG. 2 is a diagram for explaining an adversarial patch attack;
FIG. 3 is a diagram for explaining fraud detection and patch detection technique;
FIG. 4 is a diagram illustrating an example of the patch detection technique against adversarial patch attacks;
FIG. 5 is a diagram for explaining a drawback in the patch detection technique by adding missingness;
FIG. 6 is a diagram for explaining missingness addition according to the present embodiment;
FIG. 7 is a diagram illustrating a configuration example of an information processing system 1 according to the present embodiment;
FIG. 8 is a diagram illustrating a functional configuration example of an information processing device 10 according to the present embodiment;
FIG. 9 is a diagram for explaining instance segmentation;
FIG. 10 is a diagram illustrating an example of missingness addition according to the present embodiment;
FIG. 11 is a flowchart illustrating an example of a patch detection process according to the present embodiment;
FIG. 12 is a flowchart illustrating an example of a missingness adding process according to the present embodiment; and
FIG. 13 is a diagram illustrating a hardware configuration example of the information processing device 10.

### DESCRIPTION OF EMBODIMENTS

Preferred embodiments of the present invention will be explained with reference to accompanying drawings. The present embodiment is not intended to be limited by the examples. The examples may be combined as appropriate as long as there is no contradiction.

First, conventional techniques for detecting adversarial patch attacks and its drawback will be described. An adversarial patch attack is, for example, an attack that causes image AI (for example, object detection model) to falsely recognize an object to be detected when the object is detected from an image. Existing object detection algorithms include YOLO (You Only Look Once) and Faster R-CNN (Faster Region-based Convolutional Neural Networks), for example.

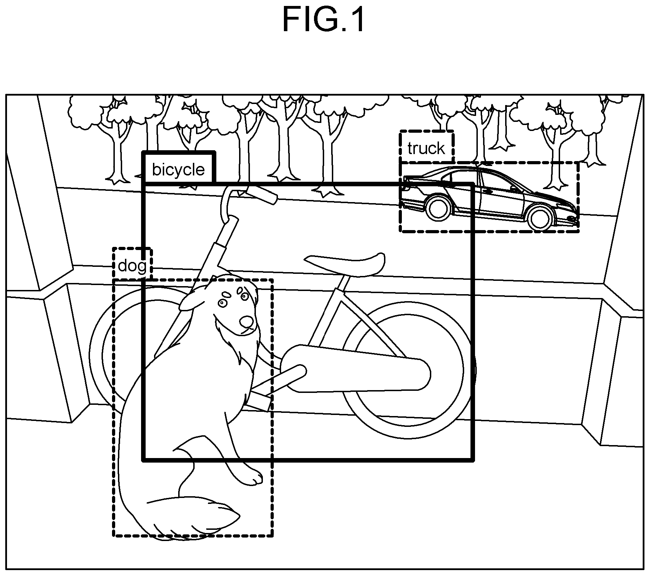

FIG. 1 is a diagram for explaining object detection. FIG. 1 illustrates an example in which objects are detected from an input image using image AI. In the example in FIG. 1, bounding boxes, which are rectangular regions each surrounding an object in the image, and classes indicating what the objects are (dog, bicycle, etc.) are depicted as outputs of object detection. In addition, for example, the confidence level of a class indicated by 0 to 1 may be output.

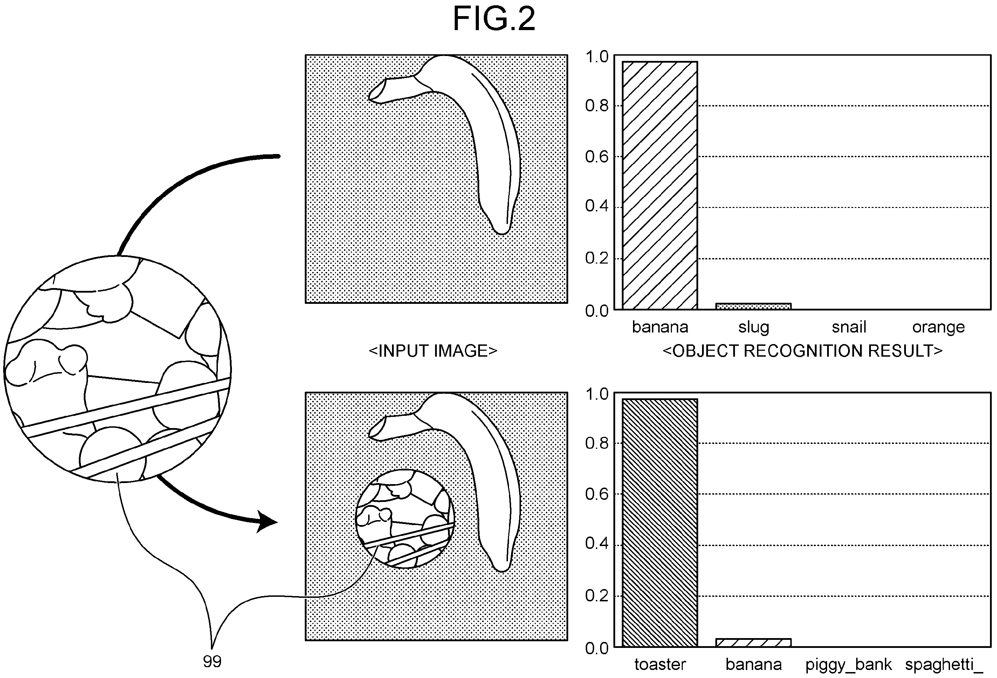

FIG. 2 is a diagram for explaining an adversarial patch attack. An adversarial patch attack is a variant of adversarial example attacks in which, for example, as illustrated in FIG. 2, an adversarial patch 99 is applied to an object to cause image AI to falsely recognize the object. In the example in FIG. 2, the adversarial patch 99 is used in an input image recognized as a banana with a confidence level of almost 100%, causing the input image to be falsely recognized as a toaster with a confidence level of almost 100%. False recognition caused by the adversarial patch 99 includes, in addition to recognition as a different object like the example in FIG. 2, for example, preventing recognition as an object, recognizing an object in a place with no objects, and recognizing a bounding box at a position displaced from the correct position. For example, if there are a plurality of objects to be attacked, the adversarial patch 99 is often applied to each object. Adversarial patch attacks include, for example, Adversarial Patch and DPatch.

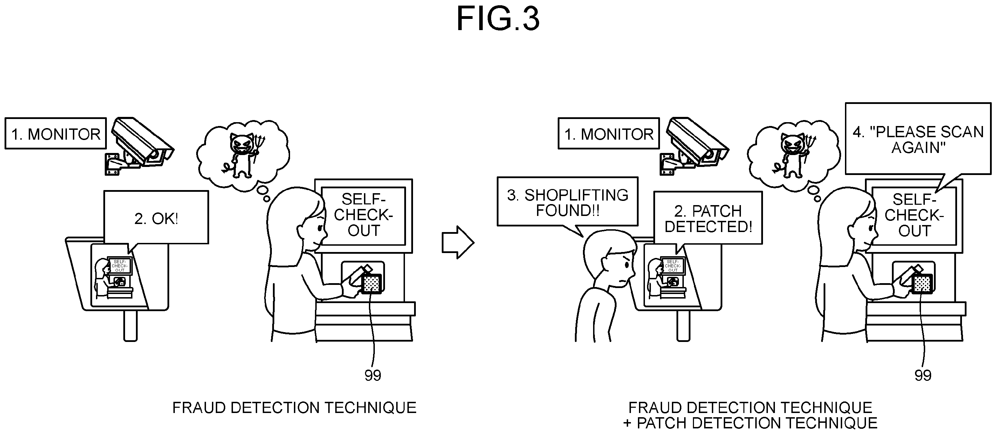

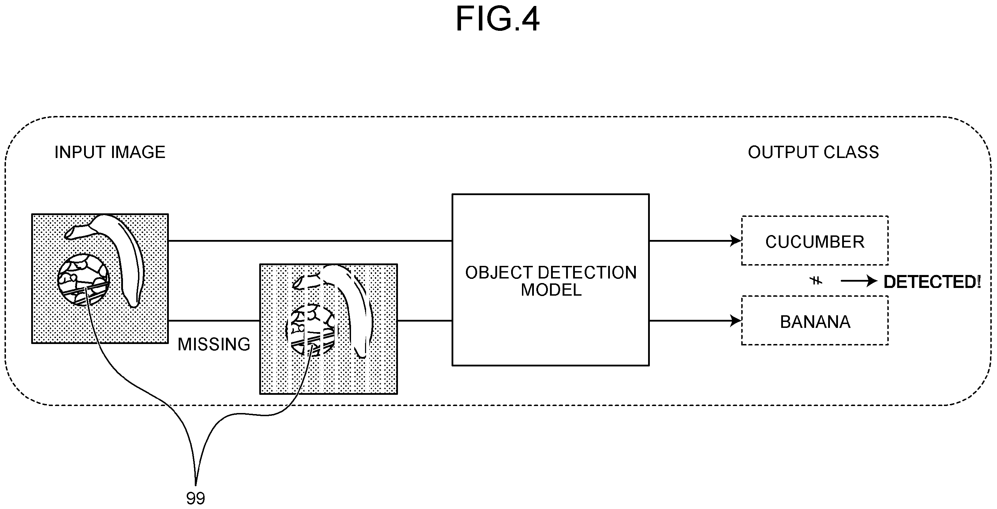

Such an adversarial patch attack using the adversarial patch 99 poses a significant threat to image AI such as object detection AI. FIG. 3 is a diagram for explaining fraud detection and patch detection technique. As illustrated on the left side of FIG. 3, for example, in a retail domain to be monitored using surveillance camera videos, a malicious person applies the adversarial patch 99 to a high-priced product to prevent self-checkout fraud detection AI, which is a kind of object detection AI, from correctly recognizing the product. This results in, for example, loss on sales due to overlooking of fraud. The industry is therefore requested to detect adversarial patch attacks and thereby take appropriate actions. As an example of such actions, as illustrated on the right side of FIG. 3, if the use of the adversarial patch 99 is detected, automated voice at the self-checkout prompts rescan, thereby preventing loss on sales. The technique for detecting the adversarial patch 99 will be described in detail with reference to FIG. 4.

FIG. 4 is a diagram illustrating an example of the patch detection technique against adversarial patch attacks. The example of the patch detection technique illustrated in FIG. 4 generates an image by performing image processing on an input image to add missingness, performs object detection using an object detection model for each of the missingness-added image and the original image, and compares the output classes with each other to detect a patch. In FIG. 4, as an example of the missingness added to the input image, a plurality of missing lines with a randomly set width and spacing are added in the vertical direction of the input image. For example, as illustrated in FIG. 4, if the comparison between the respective output classes of the original image and of the missingness-added image indicates a mismatch, it is determined that the adversarial patch 99 has been used to cause false recognition of an object, the adversarial patch 99 is detected, and an alert or the like is issued.

The patch detection technique illustrated in FIG. 4 is, for example, a method using the following two features. The first feature is, for example, that the adversarial patch 99 is vulnerable to image processing, and image processing reduces the impact of the adversarial patch 99. On the other hand, the second feature is, for example, that an object detection model is immune to image processing, and image processing hardly affects the accuracy of object detection by the object detection model.

The patch detection technique as illustrated in FIG. 4 can be used to identify what object has been attacked, for example, by checking the output class of the processed image (missingness-added image), thereby ensuring a kind of explainability. For example, in FIG. 4, an object detected as a "cucumber" in the original image is detected as a "banana" in the missingness-added image, indicating that the banana was attacked by the adversarial patch 99. Consequently, for example, the self-checkout can prompt payment for the banana.

Although FIG. 4 illustrates the addition of a plurality of missing lines as an example of image processing, the image processing may be, for example, smoothing, conversion into gray scales, sharpening, contrast change, or brightness change. However, the missingness has the effect of reducing the impact of the adversarial patch 99 more than the other processing. The missingness is not limited to a plurality of missing lines with a randomly set width and spacing, for example, as illustrated in FIG. 4, and may be, for example, missingness such as a square with a randomly set size and position.

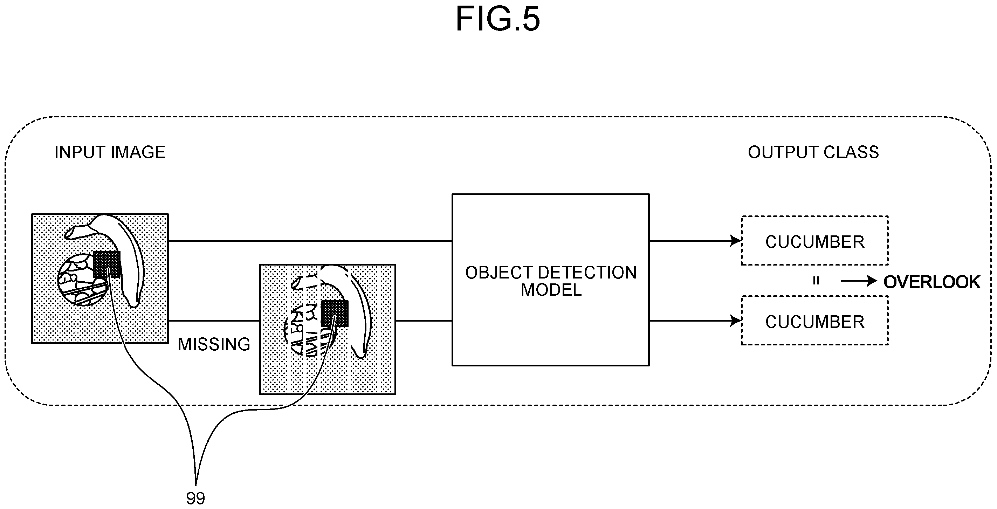

However, even such patch detection technique using missingness addition, which is more effective against adversarial patch attacks, has a drawback. FIG. 5 is a diagram for explaining a drawback in the patch detection technique by adding missingness. For example, when missingness with a randomly set size and position is added, as illustrated in FIG. 5, the missingness does not cover the adversarial patch 99 (missingness is not added to the adversarial patch 99 on the image), so that the patch attack may be overlooked without reducing the impact of the adversarial patch 99.

One of the objects in the present embodiment is therefore to improve the detection accuracy against adversarial patch attacks by performing image processing so that missingness covers the adversarial patch 99.

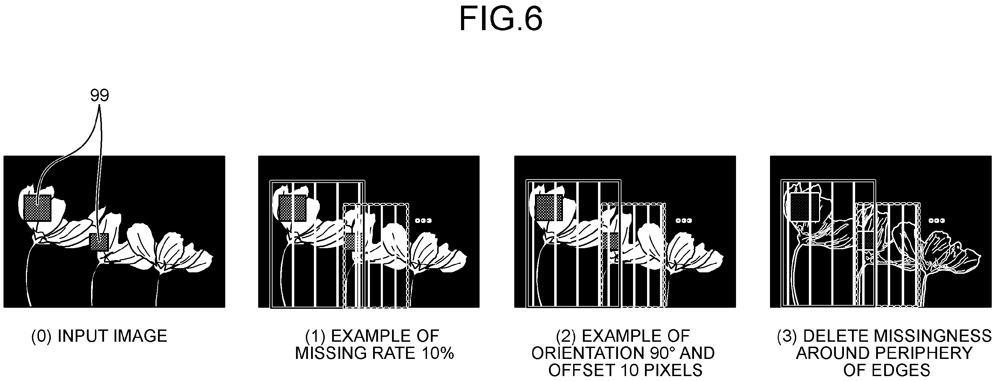

FIG. 6 is a diagram for explaining missingness addition according to the present embodiment. Although described in detail later, in the present embodiment, for example, as illustrated in FIG. 6, (0) to an input image, (1) missingness is added which exceeds a missing rate (10% in the example in FIG. 6) determined from the minimum size of the adversarial patch 99 that is predefined for the size of the object. This operation can diminish the adversarial patch 99 on the image by a certain area or larger for each object and reduce the impact of the patch, thereby improving detection accuracy against adversarial patch attacks.

In the present embodiment, for example, as countermeasures against predicting a missing position and circumventing missingness addition to the adversarial patch 99, (2) the orientation and offset (for example, the number of pixels from a predetermined reference position) of the missingness are randomly set, as illustrated in FIG. 6.

In the present embodiment, for example, as illustrated in FIG. 6, (3) the edges of an object are determined, and missingness around the periphery of the edges serving as major features for identifying the object is removed (no missingness is added to the periphery of the edges). For example, it is difficult for an object detection model or the like to identify and detect the adversarial patch 99 as an object from an image, because there are many kinds of patches and new patches may be created.

Thus, as illustrated in FIG. 6, the present embodiment performs control such that the adversarial patch 99 is diminished by a certain area or larger for each object while avoiding the position around the periphery of the edges including object features.

### Configuration of Information Processing System 1

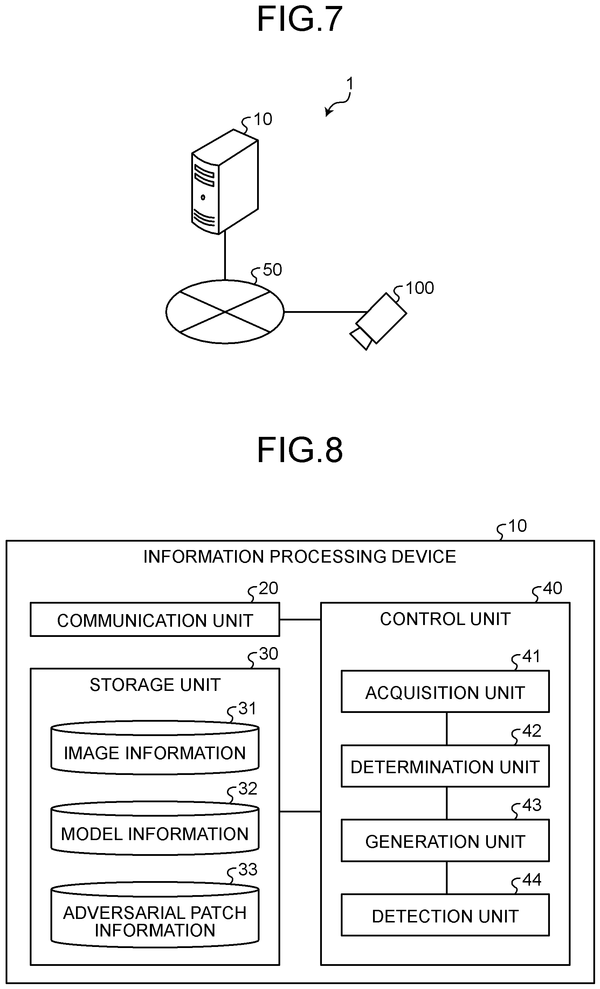

An information processing system for implementing the present embodiment will now be described. FIG. 7 is a diagram illustrating a configuration example of an information processing system 1 according to the present embodiment. As illustrated in FIG. 7, the information processing system 1 is a system in which, for example, an information processing device 10 and a camera device 100 are communicatively connected to each other via a network 50.

The network 50 may be either wired or wireless, and, for example, a variety of communication networks such as the Internet or an intranet can be employed. The network 50 is not necessarily a single network and, for example, may be configured with an intranet and the Internet through a network device such as a gateway or other devices (not illustrated).

The information processing device 10 is, for example, an information processing device such as a desktop personal computer (PC), a notebook PC, or a server computer installed in the inside of a facility to be monitored and used by facility staff or administrators. The inside of a facility may include outdoor areas as well as indoor areas.

The information processing device 10 receives, for example, a video taken by the camera device 100 from the camera device 100 in order to detect an adversarial patch attack. Strictly speaking, the video taken by the camera device 100 is a plurality of images taken by the camera device 100, that is, a series of frames of moving images.

The information processing device 10 detects objects such as products and license plates from images taken by the camera device 100, for example, using image AI such as an existing object detection model. In detecting objects such as products from the taken images, for example, as illustrated in FIG. 1, a predetermined region on the image, such as a bounding box, which is a rectangular region surrounding an object such as a product, may be detected for each object.

The information processing device 10 acquires, for example, a first value representing the size of the region of an object included in a first image taken by the camera device 100. The information processing device 10 also determines, for example, a missing rate for the adversarial patch, based on a second value representing the minimum size of the adversarial patch 99 acquired according to the first value. The information processing device 10 generates, for example, a second image in which missingness exceeding the determined missing rate is added to the first image. The information processing device 10 compares, for example, a first detection result obtained by inputting the first image into the object detection model with a second detection result obtained by inputting the second image into the object detection model. For example, if the comparison between the first detection result and the second detection result indicates a mismatch, the information processing device 10 determines that the adversarial patch 99 has been used to cause false recognition of an object, detects the adversarial patch 99, and issues an alert or the like.

In FIG. 7, while the information processing device 10 is illustrated as a single computer, the information processing device 10 may be a distributed computing system including a plurality of computers. The information processing device 10 may be a cloud computer device managed by a service provider offering cloud computing services.

The camera device 100 is, for example, a surveillance camera installed in the inside of a facility to be monitored. As illustrated in FIG. 2, the camera device 100, for example, takes a picture of a product to be paid for at a self-checkout. For example, depending on the size of the facility, there may be a plurality of camera devices 100, rather than one camera device 100 illustrated in FIG. 7. A video taken by the camera device 100 is transmitted to the information processing device 10.

Devices other than the devices illustrated in FIG. 7, such as self-checkout terminals and information processing terminals used by facility staff and administrators, may be communicatively connected to the information processing system 1 via the network 50 or the like, for example, in order to issue an alert.

### Functional Configuration of Information Processing Device 10

A functional configuration of the information processing device 10 will now be described. FIG. 8 is a diagram illustrating a functional configuration example of the information processing device 10 according to the present embodiment. As illustrated in FIG. 8, the information processing device 10 includes a communication unit 20, a storage unit 30, and a control unit 40.

The communication unit 20 is a processing unit that controls communication with other information processing devices such as the camera device 100, for example, a communication interface such as a network interface card or a universal serial bus (USB) interface.

The storage unit 30 has a function of storing various data and computer programs to be executed by the control unit 40 and is implemented, for example, by a memory, a hard disk, or other storage device. The storage unit 30 stores, for example, image information 31, model information 32, and adversarial patch information 33.

The image information 31 stores, for example, an image taken by the camera device 100. The image stored in the image information 31 is an image taken by the camera device 100 and transmitted to the information processing device 10. The image information 31 may also store, for example, an identifier to uniquely identify the camera device 100 that took the image, and the date and time of taking the image. The image information 31 may store, for example, a processed image after image processing such as object detection, missingness addition, image segmentation and edge extraction, which will be described later, on the image taken by the camera device 100.

The model information 32 stores, for example, information about an object detection model, which is a machine learning model for detecting an object from an image taken by the camera device 200, and model parameters for constructing the model. The machine learning model is generated by machine learning using, for example, videos taken by the camera device 100, that is, the taken images as input data, as well as a region including an object, a class indicating what the object is, and the confidence level of the class as correct labels. The region including an object may be, for example, a bounding box surrounding such a region with a rectangle on the taken image. The model information 32 stores, for example, information about a segmentation model described later and model parameters for constructing the model.

The adversarial patch information 33 stores, for example, information about the adversarial patch 99. The adversarial patch 99, for example, has a certain size relative to the size of an object to be falsely recognized in order to exert the effect on the object. In other words, the minimum size of the adversarial patch 99 can be predefined for each object. The adversarial patch information 33 therefore may store, for example, the minimum size of the adversarial patch 99 for each object such as a product, and a missing rate for the minimum size. The missing rate is, for example, a value indicating how much missingness in the adversarial patch 99 can reduce the impact of the adversarial patch 99.

The above information stored in the storage unit 30 is only an example, and the storage unit 30 can store various other information in addition to the above information.

The control unit 40 is a processing unit that controls the entire information processing device 10, for example, a processor. The control unit 40 includes an acquisition unit 41, a determination unit 42, a generation unit 43, and a detection unit 44. Each processing unit is an example of an electronic circuit that the processor has or a process that the processor executes.

The acquisition unit 41 acquires, for example, the first value representing the size of the region of an object included in the first image taken by the camera device 100. The acquisition unit 41 also acquires, for example, the position of the object in the first image. The first value representing the size of the region of the object may be, for example, "200×300" indicating the width×height of pixels in the first image. The position of the object in the first image may be, for example, "(120, 130)" indicating the coordinates of the center of the object in the first image. For example, when a plurality of objects are included in the first image, the first value and the position are acquired for each object. The size of the region of the object may be, for example, the size of the bounding box surrounding the object region obtained from the segmentation model.

Processing using the segmentation model is a kind of image recognition processing based on deep learning, which is called, for example, image segmentation or object segmentation. The processing using the segmentation model divides the region for each object in the input image and recognizes the kind of the object. Examples of the processing using the segmentation model include semantic segmentation, instance segmentation, and panoptic segmentation. Semantic segmentation is, for example, a technique that labels each pixel in an image and is good at extracting irregular shapes such as the sky and roads. Instance segmentation is, for example, a technique that divides a region for each object according to an object class and is good at extracting cars, people, and the like. Panoptic segmentation is, for example, a technique that combines semantic segmentation and instance segmentation.

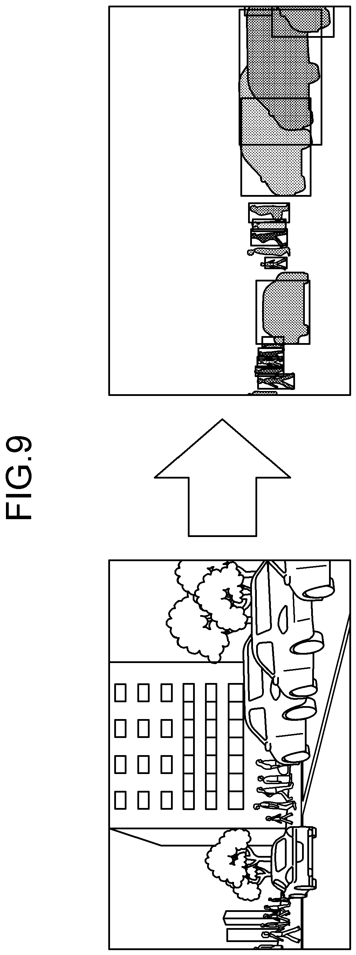

FIG. 9 is a diagram for explaining instance segmentation. FIG. 9 illustrates an example in which instance segmentation has been performed on an input image on the left side, and a region for each object such as a person or object has been extracted. As illustrated on the right side of FIG. 9, instance segmentation can extract a region for each object even when a plurality of cars or a plurality of persons (that is, a plurality of objects of the same class) are present in the same image.

The acquisition unit 41 acquires the edges of an object in the first image taken by the camera device 100, for example, using an existing edge extraction algorithm such as Canny filter. Data obtained by edge extraction is, for example, a value indicating the intensity of the edge at each pixel in the image. The acquisition unit 41 acquires an edge, that is, edge intensity, for example, using an existing edge extraction algorithm, from an image in an initial state (hereinafter referred to as "initial image") taken by the camera device 100 in advance and in which no objects are seen (only with a background). The initial image and the processed image obtained by performing edge extraction on the initial image may be stored in advance, for example, in the image information 31.

The determination unit 42 determines the missing rate for the adversarial patch 99, for example, based on the second value representing the minimum size of the adversarial patch 99 that is acquired according to the first value acquired by the acquisition unit 41. The adversarial patch 99, for example, has a certain size relative to the size of an object to be falsely recognized in order to exert the effect on the object. The minimum size of the adversarial patch 99 therefore can be predefined according to the size of the object. Thus, the determination unit 42, for example, acquires the minimum size of the adversarial patch 99 stored in advance for each object from the adversarial patch information 33, and determines the missing rate for the adversarial patch 99 based on the minimum size. For example, when the first value representing the size of the region of an object included in the first image is "200×300" in width×height, the second value may be "50×50" in width×height, using 50, which is 25 percent of the smaller value (200 in width) of the size. The determination unit 42 then determines, for example, the missing rate predefined for the minimum size of the adversarial patch 99, that is, the second value. The missing rate is, for example, a value (for example, 20%) indicating how much missingness in the adversarial patch 99 can reduce the impact of the adversarial patch 99. The missing rate is associated with the minimum size of the adversarial patch 99 and stored in advance in the adversarial patch information 33.

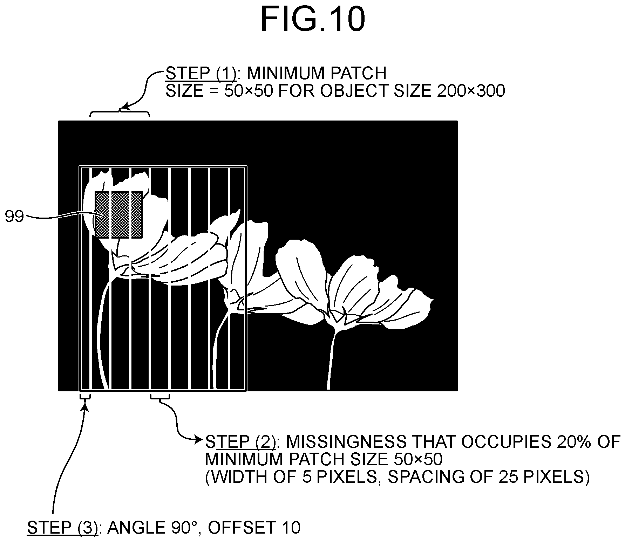

FIG. 10 is a diagram illustrating an example of missingness addition according to the present embodiment. FIG. 10 is a taken image of three flowers in which the adversarial patch 99 is superimposed on the left flower. As illustrated in step (1) in FIG. 10, for example, when the size of the object (the flower on the left) is "200×300" in width×height, the determination unit 42 determines that the minimum size of the adversarial patch 99 is "50×50" in width×height.

Returning to the description with reference to FIG. 8, the generation unit 43 generates the second image in which, for example, missingness exceeding the missing rate determined by the determination unit 42 is added to the first image taken by the camera device 100. The missingness may be added, for example, inside the region of the object in the first image. The missingness exceeding the missing rate may be set and generated randomly as long as it exceeds the missing rate. For example, when the missing rate is 20% and the second value (the minimum size of the adversarial patch 99) is "50×50" in width×height, the missingness may be a plurality of missing lines with a width of 5 pixels and a spacing of 25 pixels. In this way, for example, when the missingness is a plurality of missing lines, the generation unit 43 randomly sets a pair of the width of each missing line and the spacing between the missing lines such that the missingness exceeds the missing rate. The shape of missingness is not limited to a straight line but may be various shapes, such as the perimeter of a rectangle, a rhombus, a triangle, a circle or the like, a curve, and an elbow connector shape. When there are multiple widths or other sizes corresponding to the shapes or there are a plurality of missingness, their spacings and positions may be set such that the missingness exceeds the missing rate.

As indicated by step (2) in FIG. 10, the generation unit 43 generates, for example, a plurality of missing lines with a width of 5 pixels and a spacing of 25 pixels that occupy 20% (missing rate) of the minimum size of the adversarial patch 99, that is, "50×50" in width×height, inside the region of the corresponding object (the flower on the left).

The generation unit 43 may add, for example, missingness having a predetermined shape with a predetermined spacing, a predetermined orientation, and a predetermined offset, and at the position according to the spacing. The predetermined spacing, predetermined orientation, and predetermined offset as well as the position according to the spacing may be set randomly within a predetermined range. The orientation of the missingness may be, for example, the angle of the missingness relative to the horizontal direction, such as 0°, 45°, 90°, or 135°. The offset may be a value greater than 0 and equal to or smaller than the set predetermined spacing.

As indicated by step (3) in FIG. 10, the generation unit 43 adds, for example, missing lines at an angle of 90° and with an offset of 10.

The generation unit 43 may add missingness, for example, outside a predetermined range from the edges of the corresponding object acquired by the acquisition unit 41, in the first image taken by the camera device 100. More specifically, for example, the generation unit 43 calculates the difference between the edge intensity of the initial image and the edge intensity of the first image (hereinafter referred to as "differential edge") for each pixel. The generation unit 43 then adds missingness to the first image, for example, while avoiding a section where the differential edge is equal to or greater than a predetermined intensity (optionally with a certain range). For example, when a section where pixels with the differential edge (which is not zero) overlap the missingness has a certain number of pixels, or when there are multiple shapes of missingness, multiple widths or other sizes of missingness, and/or a plurality of missingness, generation and addition of missingness may be redone from the setting of the spacing, position, and the like. In this way, the generation unit 43 can add, for example, missingness with fewer interruptions while minimizing a section where the edges of the object and the vicinity thereof overlap the missingness. Alternatively, missingness may be added using only the edge intensity of the first image, instead of the differential edge, while avoiding the edges of the object and the vicinity thereof in the first image (outside a predetermined range from the edges of the object). The addition of missingness by the generation unit 43 is performed for each object when a plurality of objects are included in the first image taken by the camera device 100.

The generation unit 43 can add missingness, for example, outside the object region in the second image at a predetermined angle, width, spacing, and the like. The predetermined angle, width, and spacing may be, for example, 90°, 1 pixel, and 10 pixels, respectively. The outside of the object region in the second image may be, for example, turned into solid black (that is, all missing), instead of adding partial missingness.

The detection unit 44 compares, for example, the first detection result obtained by inputting the first image taken by the camera device 100 into an object detection model with the second detection result obtained by inputting the second image generated by the generation unit 43 adding missingness into the object detection model. The detection unit 44 then, for example, issues an alert if the comparison between the first detection result and the second detection result indicates a mismatch. For example, the detection unit 44 may issue an alert if the output class does not match in at least a certain number of second images in the detection results obtained by inputting each of a plurality of second images generated by adding missingness with gradually changing missing rates into the object detection model.

### Process Flow

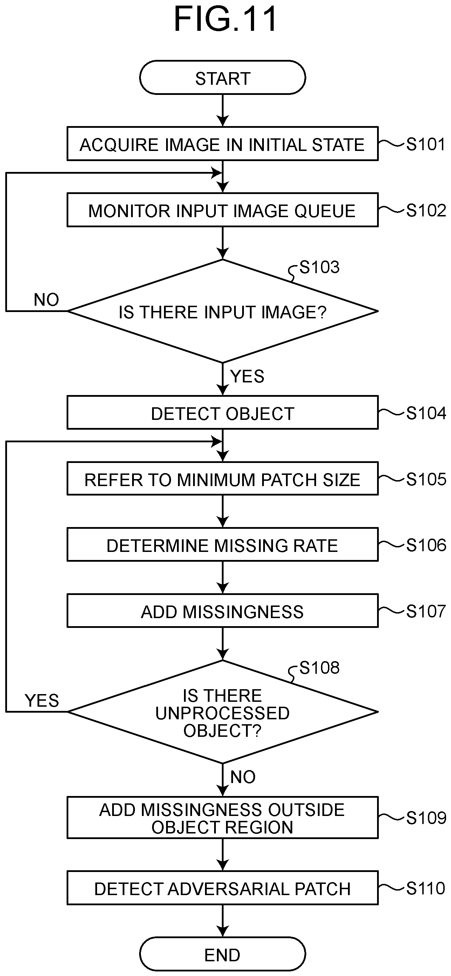

Referring now to FIG. 11, a patch detection process according to the present embodiment performed by the information processing device 10 will be described in sequence. FIG. 11 is a flowchart illustrating an example of the patch detection process according to the present embodiment.

First, as illustrated in FIG. 11, the information processing device 10 acquires, for example, an image in the initial state (initial image) taken by the camera device 100 in advance and in which no objects are seen (only with a background), from the image information 31 or the like (step S101). When the initial image is not used in adding missingness, step S101 is not necessarily performed.

Next, the information processing device 10 monitors, for example, an input image queue (step S102). The input image queue may be, for example, a region in which an image taken by the camera device 100 and timely transmitted from the camera device 100 is stored as an input image in order to perform fraud detection on the image.

Next, the information processing device 10 determines, for example, whether there is an input image in the input image queue (step S103). If there is no input image in the input image queue (No at step S103), the process returns to step S102.

On the other hand, if there is an input image in the input image queue (Yes at step S103), the information processing device 10 detects an object from the input image, for example, using the segmentation model (step S104). If a plurality of objects are detected from the input image at step S104, the processing at subsequent steps S105 to S107 is performed for each object.

Next, the information processing device 10 refers to, for example, the adversarial patch information 33 for the minimum size of the adversarial patch 99 according to the size of the region of the object detected at step S104 (step S105).

Next, the information processing device 10 determines, for example, the missing rate for the adversarial patch 99, based the minimum size of the adversarial patch 99 referred to at step S105 (step S106).

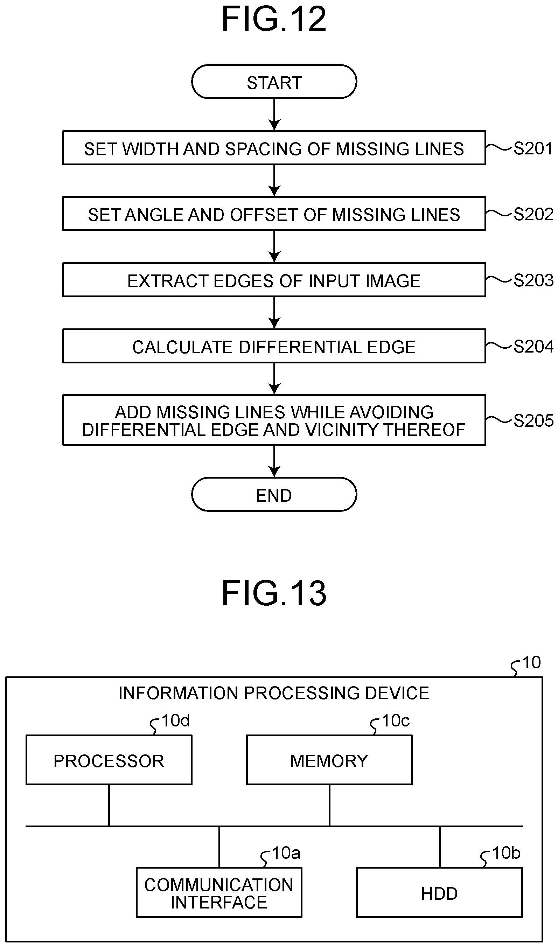

Next, the information processing device 10 generates a missingness-added image, for example, by adding missingness exceeding the missing rate determined at step S106 to the input image (step S107). A more detailed flow of the missingness adding process at step S107 will be described later with reference to FIG. 12.

Next, the information processing device 10 determines, for example, whether there is an object detected from the input image at step S104 that has not yet been processed at steps S105 to S107 (step S108). If there is an unprocessed object (Yes at step S108), the process returns to step S105 and the information processing device 10 repeats steps S105 to S108, for example, until there are no more unprocessed objects.

On the other hand, if there is no unprocessed object (No at step S108), the information processing device 10, for example, adds partial or global missingness outside the object region in the missingness-added image generated at step S107 (step S109).

Next, the information processing device 10 compares, for example, the detection result obtained by inputting the input image into an object detection model with the detection result obtained by inputting the missingness-added image into the object detection model and, if the comparison indicates a mismatch, detects the adversarial patch 99 (step S110). After execution of step S110, the patch detection process illustrated in FIG. 11 ends.

Referring now to FIG. 12, the missingness adding process according to the present embodiment performed by the information processing device 10 will be described in sequence. FIG. 12 is a flowchart illustrating an example of the missingness adding process according to the present embodiment. The missingness adding process illustrated in FIG. 12 is an example of the details of step S107 in the patch detection process illustrated in FIG. 11. The missingness adding process illustrated in FIG. 12 is an example of adding a plurality of missing lines as missingness.

First, as illustrated in FIG. 12, the information processing device 10 sets the width and spacing of the missing lines, for example, such that the missingness exceeds the missing rate determined at step S106 in the patch detection process illustrated in FIG. 11 (step S201).

Next, the information processing device 10 randomly sets, for example, the angle and offset of the missing lines, within a predetermined range (step S202).

Next, the information processing device 10 extracts, for example, the edges of the input image (step S203).

Next, the information processing device 10 calculates, for example, the differential edge for each pixel between the edge intensity of the initial image acquired at step S101 in the patch detection process illustrated in FIG. 11 and the edge intensity of the input image extracted at step S203 (step S204).

Next, the information processing device 10 adds, for example, missing lines to the input image while avoiding the differential edge calculated at step S204 and the vicinity thereof (step S205). After execution of step S205, the missingness adding process illustrated in FIG. 12 ends, and the process proceeds to step S108 in the patch detection process illustrated in FIG. 11.

### Advantageous Effects

As described above, the information processing device 10 acquires the first value representing the size of the region of an object included in the first image, determines the missing rate for the adversarial patch 99, based on the second value representing the minimum size of the adversarial patch 99 acquired according to the first value, generates the second image in which missingness exceeding the missing rate is added to the first image, and compares the first detection result obtained by inputting the first image into an object detection model with the second detection result obtained by inputting the second image into the object detection model.

In this way, the information processing device 10 generates the second image by adding, to the first image, missingness exceeding the missing rate for the minimum patch size according to the first value indicating the size of the object detected from the first image, and performs object detection from each of the first image and the second image. The information processing device 10 then compares the object detection results between the first image and the second image, thereby improving detection accuracy against adversarial patch attacks.

The process of generating the second image that is performed by the information processing device 10 includes a process of generating the second image in which missingness is added inside the region in the first image.

With this configuration, the information processing device 10 can improve detection accuracy against adversarial patch attacks.

The process of generating the second image that is performed by the information processing device 10 includes a process of generating the second image in which a predetermined shape is added as missingness with a predetermined spacing, a predetermined orientation, and a predetermined offset, and at a position according to the spacing.

With this configuration, the information processing device 10 can improve detection accuracy against adversarial patch attacks.

The information processing device 10 randomly sets the predetermined spacing, the predetermined orientation, the predetermined offset, and the position, within a predetermined range.

With this configuration, the information processing device 10 can take countermeasures against predicting a missing position and circumventing missingness addition to the adversarial patch 99, thereby improving detection accuracy against adversarial patch attacks.

The information processing device 10 acquires the edges of an object in the first image, and the process of generating the second image that is performed by the information processing device 10 includes a process of generating the second image in which missingness is added outside a predetermined range from the edges in the first image.

With this configuration, the information processing device 10 can remove the missingness around the periphery of the edges serving as major features for identifying an object, thereby improving detection accuracy against adversarial patch attacks.

The information processing device 10 issues an alert when the comparison between the first detection result and the second detection result indicates a mismatch.

With this configuration, the information processing device 10 can determine that the adversarial patch 99 has been used to cause false recognition of an object and can issue an alert indicating that the adversarial patch 99 has been detected.

### System

The processing procedures, control procedures, specific names, and information including various data and parameters referred to in the description and drawings may be changed as desired unless otherwise specified. The specific examples, distributions, numerical values, and the like described in examples are only by way of example and may be changed as desired.

The specific forms of distribution and integration of the components of each device are not limited to those depicted in the drawings. In other words, all or some of the components may be functionally or physically distributed or integrated in arbitrary units, depending on various loads and use conditions. Furthermore, the processing functions of each device can be entirely or partially implemented by a central processing unit (CPU) and a computer program analyzed and executed by the CPU, or by hardware using wired logic.

### Hardware

FIG. 13 is a diagram illustrating a hardware configuration example of the information processing device 10. As illustrated in FIG. 13, the information processing device 10 includes a communication interface 10a, a hard disk drive (HDD) 10b, a memory 10c, and a processor 10d. The parts illustrated in FIG. 13 are connected to each other by buses or other means.

The communication interface 10a is, for example, a network interface card that communicates with other servers. The HDD 10b stores computer programs and DBs for operating the functions illustrated in FIG. 8.

The processor 10d is a hardware circuit that operates a process that executes each of the functions illustrated in FIG. 8 and the like by reading a computer program for executing the same processing as each of the processing units illustrated in FIG. 8 from the HDD 10b or the like, and loading the computer program into the memory 10c. In other words, this process executes the same function as each of the processing units of the information processing device 10. Specifically, the processor 10d reads a computer program having the same functions as the acquisition unit 41, the determination unit 42, the generation unit 43, the detection unit 44, and the like from the HDD 10b or the like. The processor 10d then performs a process for executing the same processing as the generation unit 43 and the like.

In this way, the information processing device 10 operates as an information processing device that performs an operation control process by reading and executing a computer program for executing the same processing as each of the processing units illustrated in FIG. 8. Alternatively, the information processing device 10 can read a computer program from a recording medium by a medium reader and execute the read computer program to implement the same functions as those in the above examples. Other computer programs as used in the examples are not necessarily executed by the information processing device 10. For example, the present embodiment may be applied similarly even when another information processing device executes a computer program or when the information processing device 10 and another information processing device cooperate to execute a computer program.

The computer program for executing the same processing as each of the processing units illustrated in FIG. 8 can be distributed via the Internet or other networks. The computer program can also be recorded on a computer-readable recording medium such as a hard disk, a flexible disk (FD), a CD-ROM, a magneto-optical disk (MO), or a digital versatile disc (DVD) and can be read from the recording medium and executed by a computer.

## Claims

1. An information processing program that causes a computer (10) to execute a process comprising:
acquiring a first value representing a size of a region of an object included in a first image;
determining a missing rate for an adversarial patch, based on a second value representing a minimum size of the adversarial patch acquired according to the first value;
generating a second image in which missingness exceeding the missing rate is added to the first image; and
comparing a first detection result obtained by inputting the first image into an object detection model with a second detection result obtained by inputting the second image into the object detection model.

2. The information processing program according to claim 1, wherein the generating includes a process of generating the second image in which the missingness is added inside the region in the first image.

3. The information processing program according to claim 1, wherein the generating includes generating the second image in which a predetermined shape is added as the missingness with a predetermined spacing, a predetermined orientation, and a predetermined offset, and at a position according to the spacing.

4. The information processing program according to claim 3, wherein the process further includes randomly setting the predetermined spacing, the predetermined orientation, the predetermined offset, and the position, within a predetermined range.

5. The information processing program according to any one of claims 1 to 4, wherein
the process further includes acquiring an edge of the object in the first image, and
the generating includes generating the second image in which the missingness is added outside a predetermined range from the edge in the first image.

6. The information processing program according to any one of claims 1 to 4, wherein the process further includes issuing an alert when comparison between the first detection result and the second detection result indicates a mismatch.

7. An information processing method carried out by a computer (10), comprising:
acquiring a first value representing a size of a region of an object included in a first image;
determining a missing rate for an adversarial patch, based on a second value representing a minimum size of the adversarial patch acquired according to the first value;
generating a second image in which missingness exceeding the missing rate is added to the first image; and
comparing a first detection result obtained by inputting the first image into an object detection model with a second detection result obtained by inputting the second image into the object detection model.

8. An information processing device (10) comprising a control unit configured to execute a process including:
acquiring a first value representing a size of a region of an object included in a first image;
determining a missing rate for an adversarial patch, based on a second value representing a minimum size of the adversarial patch acquired according to the first value;
generating a second image in which missingness exceeding the missing rate is added to the first image; and
comparing a first detection result obtained by inputting the first image into an object detection model with a second detection result obtained by inputting the second image into the object detection model.
